# EUROPÄISCHE PATENTSCHRIFT

(11) **EP 4 313 376 B1**
(45) Veröffentlichungstag und Bekanntmachung des Hinweises auf die Patenterteilung: **18.12.2024**
(21) Anmeldenummer: 22722411.0
(22) Anmeldetag: 22.03.2022
(51) Int. Cl.: B01D 53/94, B01J 23/44, B01J 23/46, B01J 23/63, B01J 35/00, B01J 37/02, B01J 37/08, F01N 3/035, B01J 23/00, B01J 35/56, F01N 3/022, F01N 3/08, F01N 3/10, F01N 3/20

(54) **PARTIKELFILTER FÜR BENZINMOTORENABGAS**
PARTICLE FILTER FOR EXHAUST GAS OF GASOLINE ENGINES
FILTRE À PARTICULES POUR GAZ D'ÉCHAPPEMENT DE MOTEURS À ESSENCE

(30) Priorität: 23.03.2021 DE 102021107129
(43) Veröffentlichungstag der Anmeldung: 07.02.2024
(73) Patentinhaber: Umicore AG & Co. KG, 63457 Hanau-Wolfgang (DE)
(72) Erfinder: GOTTHARDT, Meike Antonia, 60385 Frankfurt (DE); SCHOENHABER, Jan, 64287 Darmstadt (DE); DEIBEL, Naina, 64319 Pfungstadt (DE); KUCEROVA, Gabriela, 89250 Senden (DE)
(86) Internationale Anmeldenummer: PCT/EP2022/057418
(87) Internationale Veröffentlichungsnummer: WO 2022/200307

(56) Entgegenhaltungen:
- EP-A1- 1 486 248
- EP-A1- 3 078 821
- EP-A1- 3 501 646
- WO-A1-2009/087998
- DE-A1- 102015 212 788
- DE-A1- 102019 100 099
- US-A1- 2020 182 115

## Beschreibung

Die vorliegende Erfindung ist auf ein Wandflussfilter gerichtet, welches insbesondere in Abgasanlagen von mit Benzinmotoren angetriebenen Fahrzeugen verwendet wird. Das Filter besitzt verbesserte Dreiwegeaktivität und filtert die bei der Verbrennung von Benzin entstehenden feinen Partikel aus dem Abgasstrom heraus. Ebenfalls wird ein Verfahren zur Herstellung eines entsprechenden Filters und dessen bevorzugte Verwendung beansprucht.

Das Abgas von z.B. Verbrennungsmotoren in Kraftfahrzeugen enthält typischerweise die Schadgase Kohlenmonoxid (CO) und Kohlenwasserstoffe (HC), Stickoxide (NOₓ) und gegebenenfalls Schwefeloxide (SOₓ), sowie Partikel, die überwiegend aus Rußrückständen und gegebenenfalls anhaftenden organischen Agglomeraten bestehen. Diese werden als Primäremissionen bezeichnet. CO, HC und Partikel sind Produkte der unvollständigen Verbrennung des Kraftstoffs im Brennraum des Motors. Stickoxide entstehen im Zylinder aus Stickstoff und Sauerstoff der Ansaugluft, wenn die Verbrennungstemperaturen lokal 1400°C überschreiten. Schwefeloxide resultieren aus der Verbrennung organischer Schwefelverbindungen, die in nicht-synthetischen Kraftstoffen immer in geringen Mengen enthalten sind. Zur Entfernung dieser für Umwelt und Gesundheit schädlichen Emissionen aus den Abgasen von Kraftfahrzeugen sind eine Vielzahl katalytischer Abgasreinigungstechnologien entwickelt worden, deren Grundprinzip üblicherweise darauf beruht, dass das zu reinigende Abgas über einen Katalysator geleitet wird, der aus einem Durchfluss- oder einem Wandflusswabenkörper (Wandflussfilter) und einer darauf und/oder darin aufgebrachten katalytisch aktiven Beschichtung besteht. Der Katalysator fördert die chemische Umsetzung verschiedener Abgaskomponenten unter Bildung unschädlicher Produkte wie beispielsweise Kohlendioxid und Wasser und entfernt dabei im Falle eines Wandflussfilters gleichzeitig die Rußpartikel.

Partikel können sehr effektiv mit Hilfe von Partikelfiltern aus dem Abgas entfernt werden. Besonders bewährt haben sich Wandflussfilter aus keramischen Materialien. Diese haben zwei Stirnseiten und sind aus einer Vielzahl von parallelen Kanälen mit einer bestimmten Länge aufgebaut, die durch poröse Wände gebildet werden und von einer Stirnseite zur anderen reichen. Die Kanäle sind wechselseitig an einem der beiden Enden des Filters verschlossen, so dass erste Kanäle gebildet werden, die an der ersten Seite des Filters offen und auf der zweiten Seite des Filters verschlossen sind, sowie zweite Kanäle, die an der ersten Seite des Filters verschlossen und auf der zweiten Seite des Filters offen sind. Entsprechend der Anordnung des Filters im Abgasstrom bildet dabei eine der Stirnflächen die Eintrittsstirnfläche und die zweite Stirnfläche die Austrittsstirnfläche für das Abgas. Die an der Eintrittsseite offenen Strömungskanäle bilden die Eintrittskanäle und die an der Austrittsseite offenen Strömungskanäle bilden die Austrittskanäle. Das beispielsweise in die ersten Kanäle einströmende Abgas kann den Filter nur über die zweiten Kanäle wieder verlassen und muss zu diesem Zweck durch die Wände zwischen den ersten und zweiten Kanälen durchfließen. Aus diesem Grund weist das Material, aus welchem die Wandflussfilter aufgebaut sind, eine offenporige Porosität auf. Beim Durchtritt des Abgases durch die Wand werden die Partikel zurückgehalten.

Wandflussfilter können katalytisch aktiv sein. Die katalytische Aktivität wird durch eine Beschichtung des Filters mit einer Beschichtungssuspension erreicht, welche das katalytisch aktive Material enthält. Das Kontaktieren der katalytisch aktiven Materialien mit dem Wandflussfilter wird in der Fachwelt als "Beschichten" bezeichnet. Die Beschichtung übernimmt die eigentliche katalytische Funktion und enthält häufig Speichermaterialien und/oder katalytisch aktive Metalle, die meist in hoch disperser Form auf temperaturstabilen, hochoberflächigen Metallverbindungen, insbesondere -oxiden, abgeschieden vorliegen. Die Beschichtung erfolgt meist durch das Aufbringen einer wässrigen Suspension der Speichermaterialien und katalytisch aktiven Komponenten - auch Washcoat genannt - auf oder in die Wand des Wandflussfilters. Nach dem Aufbringen der Suspension wird der Träger in der Regel getrocknet und gegebenenfalls bei erhöhter Temperatur kalziniert. Die Beschichtung kann aus einer Schicht bestehen oder aus mehreren Schichten aufgebaut sein, die übereinander (mehrschichtig) und/oder versetzt zueinander (als Zonen) auf einen entsprechenden Filter aufgebracht werden. Das katalytisch aktive Material kann auf die porösen Wände zwischen den Kanälen aufgebracht werden (sogenannte Aufwandbeschichtung). Diese Beschichtung kann allerdings zu einer starken Erhöhung des Gegendrucks des Filters führen. Vor diesem Hintergrund schlagen beispielsweise die JPH01-151706 und die WO2005016497A1 vor, einen Wandflussfilter dergestalt mit einem Katalysator zu beschichten, dass letzterer die porösen Wände durchdringt (sogenannte Inwandbeschichtung). Unter einer Beschichtungszone wird das Vorhandensein eines katalytisch aktiven Materials (Beschichtung) auf oder in der Wand des Filters über weniger als die gesamte Länge des Wandflussfilters verstanden. Sofern vorliegend von Länge des Wandflussfilters geredet wird, ist hierunter die gesamte Länge gemeint, inklusive der Stopfen, die den Abschluss der Kanäle bilden.

Für stöchiometrisch verbrennende Motoren werden sogenannte Dreiwegkatalysatoren zur Abgasminderung eingesetzt. Dreiwegkatalysatoren (three-way-catalysts, TWCs) sind dem Fachmann hinlänglich bekannt und seit den achtziger Jahren des letzten Jahrhunderts gesetzlich vorgeschrieben. Die eigentliche Katalysatormasse besteht hier zumeist aus hochoberflächigen Metallverbindungen, insbesondere oxidischen Trägermaterialien, auf denen die katalytisch aktiven Komponenten in feinster Verteilung abgeschieden sind. Als katalytisch aktive Komponenten eignen sich für die Reinigung von stöchiometrisch zusammengesetzten Abgasen besonders die Edelmetalle der Platingruppe Platin, Palladium und/oder Rhodium. Als Trägermaterial eignen sich zum Beispiel Aluminiumoxid, Siliciumdioxid, Titanoxid, Zirkonoxid, Ceroxid und deren Mischoxide und Zeolithe. Bevorzugt werden so genannte aktive Aluminiumoxide mit einer spezifischen Oberfläche (BET-Oberfläche gemessen nach DIN 66132 - neueste Fassung am Anmeldetag) von mehr als 10 m²/g eingesetzt. Zur Verbesserung der dynamischen Konvertierung enthalten Dreiwegkatalysatoren darüber hinaus auch Sauerstoff speichernde Komponenten. Hierzu gehören Cer/Zirkon-Mischoxide, welche ggf. mit Lanthanoxid, Praseodymoxid und/oder Yttriumoxid versehen sind. Auch zonierte und Mehrschichtsysteme mit Dreiwegaktivität sind mittlerweile bekannt (US8557204; US8394348). Befindet sich ein derartiger Dreiwegkatalysator auf oder in einem Partikelfilter, so spricht man von einem cGPF (catalyzed gasoline particle filter; z.B. E P2650042B1).

Die Güte eines katalytisch beschichteten Abgasfilters wird an den Kriterien Filtrationseffizienz, katalytische Performance und Druckverlust gemessen. Um diese unterschiedlichen Anforderungen zu erfüllen, werden Filter u.a. mit katalytisch aktiven Zonen versehen. Die Zonen können - wie gesagt - auf den Wänden der Zellen oder in der porösen Wand der Filtermatrix vorhanden sein.

Eine Gruppe von Beschichtungstechniken für Wandflussfilter wird in der WO06021338A1 beschrieben. Hier ist der Wandflussfilter aus einem offenporigen Material gefertigt, hat eine zylindrische Form mit der Länge L und ist von einer Eintrittsstirnfläche zu einer Austrittsstirnfläche von einer Vielzahl von Strömungskanälen durchzogen, die wechselseitig verschlossen sind. Durch senkrechtes Ausrichten der Strömungskanäle des Wandflussfilters dergestalt, dass eine Stirnfläche unten und die zweite Stirnfläche oben zu liegen kommt, Einbringen der Beschichtungszusammensetzung in den Filterkörper durch die in der unteren Stirnfläche offenen Strömungskanäle des Wandflussfilters bis zu einer gewünschten Höhe über der unteren Stirnfläche durch Anlegen einer Druckdifferenz und Entfernen überschüssiger Beschichtungszusammensetzung nach unten durch Anlegen eines Saugimpulses kann die Beschichtungssuspension aufgebracht werden. Dem gleichen Beschichtungsprinzip liegen die speziellen Abwandlungen des Verfahrens in der WO06042699A1 und WO11098450A1 zugrunde. Eine Beschichtungsapparatur, die dieses Verfahrensprinzip verwendet, ist in der WO13070519A1 dargelegt. Auch hier wird mit einem Überschuss an Beschichtungssuspension und dem Prinzip der Anwendung der Druckdifferenzumkehr gearbeitet.

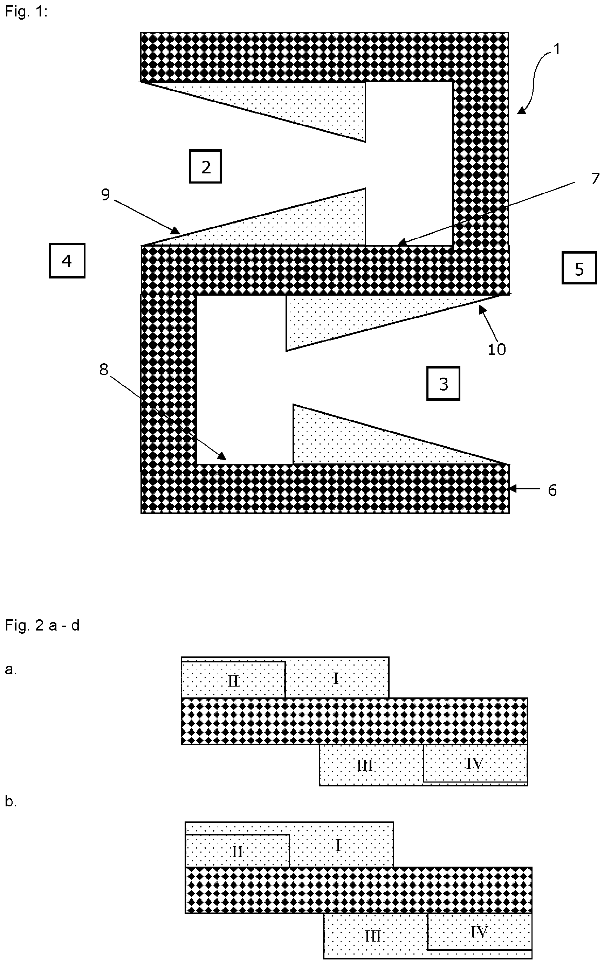

Geeignet ist dieses Beschichtungsprinzip auch zur Herstellung von Partikelfiltern, die auf der Ein- und Auslassseite Zonen mit katalytisch aktivem Material aufweisen. So ist in der WO09103699A1 ein Verfahren zur Beschichtung von Filtern mit zwei unterschiedlichen Washcoats beschrieben, wobei die Verfahrensschritte darin bestehen, dass das Filtersubstrat vertikal ausgerichtet wird, eine erste Beschichtungssuspension von unten eingepumpt wird (Druckdifferenz mit höchstem Druck am unteren Ende), die überschüssige Beschichtungssuspension durch Absaugen (Druckdifferenzumkehr) entfernt wird und der Filterkörper nach dem Drehen um 180° erneut von unten mit dem zweiten Washcoat befüllt und der Überschuss durch Absaugen entfernt wird. Der Filter wird nach dem Beschichtungsprozess getrocknet und kalziniert. Das gleiche Beschichtungsprinzip ist in der US7094728B2 offenbart. Dergestalt hergestellte beschichtete Wandflussfilter weisen häufig einen Gradienten in der Beschichtung auf, wie er schematisch und überspitzt in Fig. 1 dargestellt ist.

Zur zweiten Gruppe der Beschichtungsverfahren, bei denen die Filterkörper ohne Washcoatüberschuss und ohne Druckdifferenzumkehr beschichtet werden, gehören beispielsweise die in der WO06021339A1, WO15145122A2 und WO0110573A2 beschriebenen Verfahren. Die Beschichtung des senkrecht ausgerichteten Filterträgers mit dem Washcoat kann dabei von der unteren oder der oberen Stirnfläche aus erfolgen.

Die WO06021339A1 offenbart ein Verfahren zum Beschichten eines Wandfluss-Partikelfilters mit einer Beschichtungszusammensetzung, wobei das Partikelfilter aus einem offenporigen Material gefertigt ist, eine zylindrische Form mit der Länge L aufweist und von einer Eintrittsstirnfläche zu einer Austrittsstirnfläche eine Vielzahl von Strömungskanälen aufweist, die wechselseitig verschlossen sind. Das Verfahren ist dadurch gekennzeichnet, dass die Strömungskanäle des Wandflussfilters senkrecht ausgerichtet werden, so dass eine Stirnfläche unten und die zweite Stirnfläche oben zu liegen kommt, der Filter durch Eintauchen der unteren Stirnfläche des Wandflussfilters in eine definierte, vorgelegte Menge der Beschichtungszusammensetzung und Anlegen eines Unterdrucks an die Öffnungen der Austrittskanäle in der oberen Stirnfläche und Einsaugen der gesamten Menge der Beschichtungszusammensetzung in die Ein- und Austrittskanäle durch die Öffnungen der Eintrittskanäle in der unteren Stirnfläche befüllt wird. Die vorgelegte Menge der Beschichtungszusammensetzung wird entsprechend der gewünschten Beschichtungskonzentration und Beschichtungshöhe gewählt. Es erfolgt dabei nach dem Anlegen der Druckdifferenz zum Beschichten keine Druckdifferenzumkehr. Die Beschichtungssuspension wird abgemessen und nicht im Überschuss eingesetzt.

Auch die WO0110573A2 beschreibt ein Verfahren zur Beschichtung von Partikelfiltern, bei dem der Filterträger von unten mit einer abgemessenen Menge an Washcoat beaufschlagt wird. Durch Anlegen einer Druckdifferenz (Vakuum an der nach oben ausgerichteten Stirnfläche) wird die vorgelegte Menge an Beschichtungssuspension in die Kanäle des Substrates gesaugt. Das Substrat wird anschließend gedreht und der Washcoat durch Einwirkung eines Luftstrahls aus unter Druck gesetzter Luft auf das obere Ende des Substrates in den Kanälen verteilt. Es erfolgt bei diesem Verfahren keine Umkehr der Druckdifferenz, da auch der zweite Druckimpuls hinsichtlich der Bewegung des Washcoats in die gleiche Richtung zeigt wie der erste und somit keine Druckdifferenzumkehr erfolgt.

Die WO15145122A2 ist ein weiteres Bespiel für diese Gruppe der Beschichtungsverfahren. Im Gegensatz zu den oben beschriebenen Verfahren wird hier jedoch eine vordefinierte Menge an Beschichtungssuspension auf die obere Stirnfläche des senkrecht ausgerichteten Filters abgemessen aufgegeben und durch Anlegen einer Druckdifferenz (Absaugen durch Anlegen eines Vakuums an die untere Stirnfläche) in den Kanälen des Partikelfilters verteilt. Nach diesem Beschichtungsschritt erfolgt keine weitere Druckdifferenzumkehr.

Die Dokumente US2020182115A1 und DE102015212788A1 offenbaren Partikelfilter für Benzinmotoren, die anströmseitig zwei übereinanderliegende katalytische Beschichtungen und abströmseitig eine weitere katalytische Beschichtung aufweisen.

Aufgabe der vorliegenden Erfindung ist die Angabe eines Wandflussfilters, der hinsichtlich seiner katalytischen Aktivität verbessert und im Hinblick auf die Filtrationseffizienz und den Abgasgegendruck den Benzinpartikelfiltern (GPF, OPF) des Standes der Technik nicht wesentlich unterlegen ist. Das anvisierte Filter sollte insbesondere bei hoher katalytischer Aktivität eine entsprechend hohe Filtrationseffizienz bei nicht über die Ma-ßen verschlechtertem Abgasgegendruck aufweisen.

Diese und weitere sich aus dem Stand der Technik ergebende Aufgaben werden durch einen Wandflussfilter mit den Merkmalen des Anspruchs 1 gelöst. Ansprüche 6 und 9 sind auf ein Verfahren zur Herstellung bzw. eine Verwendung des erfindungsgemäßen Wandflussfilters gerichtet. Die von diesen Ansprüchen abhängigen Ansprüche richten sich auf bevorzugte Ausführungsformen der jeweiligen unabhängigen Ansprüche.

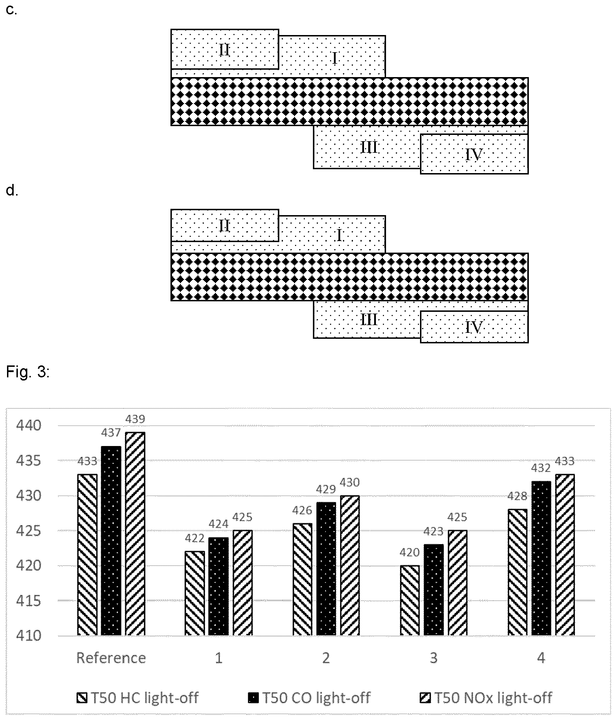

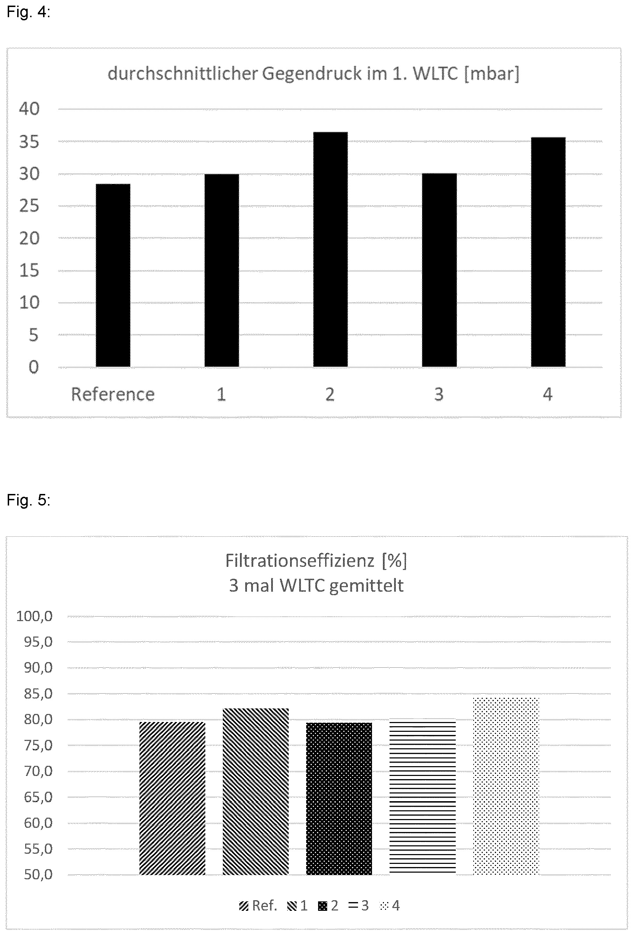

Dadurch, dass man ein Wandflussfilter zur Verminderung der Partikelemissionen im Abgas von Benzinmotoren mit der Länge L angibt, wobei das Wandflussfilter Kanäle E und A umfasst, die sich parallel zwischen einem ersten und einem zweiten Ende des Wandflussfilters erstrecken und die durch poröse Wände getrennt sind, die Oberflächen OE bzw. OA bilden und wobei die Kanäle E am zweiten Ende und die Kanäle A am ersten Ende verschlossen sind, und dieses sowohl auf den Oberflächen OE als auch OA zwei, in separaten Beschichtungsschritten aufgetragene katalytisch aktive Beschichtungen aufweist, wobei sich eine erste Beschichtung ausgehend vom ersten Ende des Wandflussfilters über 55 bis 96 % der Länge L erstreckt und eine zweite Beschichtung ausgehend vom ersten Ende des Wandflussfilters über 10 bis 40 % der Länge L erstreckt und wobei sich eine dritte Beschichtung ausgehend vom zweiten Ende des Wandflussfilters über 55 bis 96 % der Länge L erstreckt und eine vierte Beschichtung ausgehend vom zweiten Ende des Wandflussfilters über 10 bis 40 % der Länge L erstreckt, gelangt man überraschend zur Lösung der gestellten Aufgabe. Die hier propagierten Wandflussfilter (Fig. 2a-d) weisen verglichen mit einem Wandflussfilter des Standes der Technik bei gleicher Beladung eine bessere katalytische Aktivität (Fig. 3) auf, wobei letzterer mit einem Überschuss an Beschichtungssuspension von beiden Seiten beschichtet wurde und der Überschuss an Beschichtungssuspension jeweils durch eine Druckdifferenzumkehr entfernt wurde (Fig. 1). Überraschend ist weiterhin, dass der erfindungsgemäße Filter nur einen gering erhöhten Abgasgegendruck produziert (Fig. 4) und bzgl. der Filtrationseffizienz den Filtern des Standes der Technik (Fig. 1) in nichts nachsteht (Fig. 5). Die erste bis vierte Beschichtungen werden im Folgenden mit den Nummern 1 - 4 adressiert.

Die einzelnen Zonen der katalytischen Beschichtung des Wandflussfilters werden erfindungsgemäß auf der Wand der Eingangsoberfläche OE und der Ausgangsoberfläche OA jeweils von den entsprechenden offenen Enden der Kanäle zum anderen Ende hin positioniert. Der Begriff "auf der Wand" beinhaltet, dass eine der katalytisch aktiven Beschichtungen nur zu einem kleinen Teil von maximal 33 %, mehr bevorzugt weniger als 15 % und ganz bevorzugt weniger als 10 % bezogen auf die Gesamtmenge dieser katalytisch aktiven Beschichtung in die poröse Wandoberfläche der Eingangs- bzw. Ausgangskanäle eindringt. Entsprechende Analysen können mittels CT-Bildern oder SEM-Aufnahmen von Schnitten durch die Filterwand und Bildauswertverfahren ermittelt werden (Blazek et al., Chem. Eng. J. 409 (2021) 128057; Greiner et al., Chem. Eng. J. 378 (2019) 121919)..

Die Ausbildung der einzelnen Zonen kann im Rahmen der oben angegebenen Grenzen vom Fachmann variiert werden. Er wird sich dabei an den eingangs genannten Kriterien für die Güte eines Wandflussfilters orientieren. Wichtig ist, dass sich die längeren Zonen (1. und 3. Beschichtung) der katalytischen Beschichtung zumindest zu einem kleinen Anteil der Länge L überlappen, während die kurzen Zonen (2. und 4. Zone) dies nicht tun. In einer bevorzugten Ausführungsform erstreckt sich daher eine erste Beschichtung ausgehend vom ersten Ende des Wandflussfilters über 55 bis 80 % der Länge L und eine zweite Beschichtung ausgehend vom ersten Ende des Wandflussfilters über 20 bis 40 % der Länge L wobei sich eine dritte Beschichtung ausgehend vom zweiten Ende des Wandflussfilters über 55 bis 80 % der Länge L und eine vierte Beschichtung ausgehend vom zweiten Ende des Wandflussfilters über 20 bis 40 % der Länge L erstreckt. Mehr bevorzugt ist, wenn sich eine erste Beschichtung ausgehend vom ersten Ende des Wandflussfilters über 55 bis 70 % der Länge L und eine zweite Beschichtung ausgehend vom ersten Ende des Wandflussfilters über 25 bis 35 % der Länge L erstreckt und sich eine dritte Beschichtung ausgehend vom zweiten Ende des Wandflussfilters über 55 bis 70 % der Länge L und eine vierte Beschichtung ausgehend vom zweiten Ende des Wandflussfilters über 25 bis 35 % der Länge L erstreckt. Die in dieser Schrift beispielhaft genannten Filter besaßen Zonen von jeweils 60 % der Länge L für die langen Zonen und 30 % der Länge L für die kurzen Zonen.

Es hat sich als vorteilhaft erwiesen wenn sowohl die langen als auch die kurzen Zonen eine entsprechende katalytische Aktivität aufweisen. Die katalytische Aktivität einer Beschichtung wird auch durch die Menge an Beschichtung bestimmt. Die Menge an Beschichtung in g/L auf dem Filter kann vom Fachmann variiert werden. Als besonders günstig hat es sich erwiesen, wenn das Verhältnis der Menge an katalytisch aktiver Beschichtung in g/L zwischen der ersten Beschichtung und der zweiten Beschichtung bzw. zwischen der dritten und der vierten Beschichtung gleich oder weniger als 1:1 und gleich oder mehr als 1:3 beträgt. Dies bedeutet, dass die kurzen Zonen vorzugsweise in höherer Konzentration auf den Filter aufgebracht werden als die langen Zonen. Ganz besonders bevorzugt liegt das Verhältnis der Beschichtungskonzentrationen bei 1:2 bis 1:3 (in g/L gemessen). Allerdings gilt diese Angabe insbesondere für den Fall, dass die Beschichtungen auf der Oberflächen OE (Eingang) und OA (Ausgang) sich im Layout und im Aufbau entsprechen. In einer erfindungsgemäßen Ausführungsform ist es ganz besonders bevorzugt, wenn die Beschichtungen auf der Oberfläche OE und OA jeweils ungleich sind. In einer weiteren erfindungsgemäßen Ausführungsform ist es ganz besonders bevorzugt, wenn die Beschichtungen auf der Oberfläche OE und OA jeweils gleich sind. Auch alle 4 erfindungsgemäßen Beschichtungen können gleich sein. Es ist auch möglich, dass die gleichen Beschichtungen auf der Oberfläche OE ungleich zu den gleichen Beschichtungen auf der Oberfläche OA sind.

Unter gleich wird hier verstanden, dass sowohl die chemische Zusammensetzung als auch die Menge und Ausdehnung der Beschichtungen gleich sind. Allerdings kann es - wie eben beschrieben - auch sein, dass die vier besprochenen Beschichtungszonen sowohl chemisch, mengenmäßig und/oder von der Länge her je nach Anforderungsprofil unterschiedlich ausgebildet sein können. Es sei erwähnt, dass auch weitere Beschichtungen im und auf dem erfindungsgemäßen Filter vorhanden sein können. Denkbar ist z.B. die zusätzliche Beschichtung der Innenwand der Kanäle mit einer entsprechenden katalytisch aktiven Masse. Dies würde helfen die katalytische Aktivität des hier beschriebenen Wandflussfilters noch weiter zu steigern. Weiterhin denkbar sind jedoch auch Kombinationen mit einer ggf. nicht katalytisch aktiven Pulverbeschichtung in und/oder auf der Eingangsseite des Wandflussfilters. Dies würde helfen die Filtrationseffizienz weiter zu steigern, ohne dass der Abgasgegendruck immens zunimmt.

Auch die Reihenfolge der Aufbringung der einzelnen Beschichtungszonen kann unterschiedlich ausgestaltet sein. Es hat sich herausgestellt, dass - insbesondere bei gleichen Beschichtungen auf der Ein- und Ausgangsseite des Filters - eine Ausführungsform der vorliegenden Erfindung bevorzugt ist, bei der die kurzen Zonen zuletzt appliziert werden und zuerst die langen. Demnach ist es besonders vorteilhaft, wenn zuerst die erste Beschichtung und die dritte Beschichtung auf den Wandflussfilter aufgebracht werden, bevor die zweite und die vierte Beschichtung aufgebracht wird (Fig. 2c und 2d).

Die Beschichtungen sind dreiwegkatalytisch aktiv, insbesondere bei Betriebstemperaturen von 250 bis 1100 °C. Sie enthalten üblicherweise ein oder mehrere Edelmetalle, die auf einem oder mehreren Trägermaterialien fixiert sind, sowie ein oder mehrere Sauerstoffspeicherkomponenten. Die Beschichtungen umfassen bevorzugt gleiche Sauerstoffspeicherkomponenten und gleiche Trägermaterialien für Edelmetalle in verschiedenen, bevorzugt aber in gleichen Mengen. Die Beschichtungen enthalten daneben gleiche oder verschiedene Edelmetalle in gleichen oder verschiedenen Mengen. Besonders bevorzugt sind jeweils die Beschichtungen eins und zwei sowie die Beschichtungen drei und vier chemisch komplett gleich. Für die Herstellung von Wandflussfiltern hat es sich als günstig erwiesen, wenn zumindest die Beschichtungen 1 und 3 chemisch gleich sind und die Beschichtungen 2 und 4 chemisch gleich sind, sich jedoch von den Beschichtungen 1 und 3 unterscheiden. Dabei kann der Unterschied vorzugsweise in der Art der verwendeten Edelmetalle liegen und/oder in der Art der verwendeten Sauerstoffspeichermaterialien. Z.B. können entweder die Beschichtungen 1 und 3 bevorzugt Platin, Palladium oder Mischungen derselben aufweisen und die Beschichtung 2 und 4 bevorzugt Platin, Palladium, Rhodium, oder Mischungen derselben. Weiterhin können die Beschichtungen 2 und 4 ein Sauerstoffspeichermaterial aufweisen, während die Beschichtungen 1 und 3 zwei Sauerstoffspeichermaterialien aufweisen. Derartige Architekturen haben sich in Alterungstests als besonders robust gezeigt.

Als Edelmetalle kommen für obige Beschichtungen insbesondere Platin, Palladium und Rhodium in Frage, wobei Palladium, Rhodium oder Platin, Palladium und Rhodium bevorzugt und davon Palladium und Rhodium besonders bevorzugt sind. Bezogen auf das erfindungsgemäße Partikelfilter ist der Anteil von Rhodium am gesamten Edelmetallgehalt insbesondere größer oder gleich 5 Gew.-% aber gleich oder kleiner als 50 Gew.-%, bevorzugt weniger als 30 Gew.-%. Die porösen Wände des erfindungsgemäßen Partikelfilters sind bevorzugt im Wesentlichen frei von Edelmetallen. Die Edelmetalle werden üblicherweise in Mengen von 0,15 bis 5 g/L, mehr bevorzugt 0,3 bis 4 g/L bezogen auf das Volumen des Wandflussfilters eingesetzt.

Als Trägermaterialien für die Edelmetalle kommen alle dem Fachmann für diesen Zweck geläufigen Materialien in Betracht. Solche Materialien sind insbesondere Metalloxide mit einer BET-Oberfläche von 30 bis 250 m²/g, bevorzugt von 100 bis 200 m²/g (bestimmt nach DIN 66132). Besonders geeignete Trägermaterialien für die Edelmetalle sind ausgewählt aus der Reihe bestehend aus Aluminiumoxid, dotiertes Aluminiumoxid, Siliziumoxid, Titandioxid und Mischoxiden aus einem oder mehreren davon. Dotierte Aluminiumoxide sind beispielsweise Lanthanoxid-, Siliziumoxid-, Zirkoniumoxid- und/oder Titanoxid-dotierte Aluminiumoxide. Mit Vorteil wird mit Lanthan stabilisiertes Aluminiumoxid eingesetzt, wobei vorteilhaft Lanthan in Mengen von 1 bis 10 Gew.-%, bevorzugt 3 bis 6 Gew.-%, jeweils berechnet als La₂O₃ und bezogen auf das Gewicht des stabilisierten Aluminiumoxides, verwendet wird. Ein weiteres geeignetes Trägermaterial ist mit Lanthan stabilisiertes Aluminiumoxid, dessen Oberfläche mit Lanthanoxid, mit Bariumoxid oder mit Strontiumoxid beschichtet ist. In einer besonders bevorzugten Ausführungsform weist zumindest eine der Beschichtungen 1 - 4 stabilisiertes Aluminiumoxid in einer Menge von 20 bis 70 Gew.-%, bezogen auf das Gesamtgewicht der Beschichtung, Rhodium, Palladium oder Palladium und Rhodium und eine oder mehrere Sauerstoffspeicherkomponenten in einer Menge von 30 bis 80 Gew.-%, bezogen auf das Gesamtgewicht der Beschichtung, auf. Ganz bevorzugt gilt dies für alle Beschichtungen 1 -4.

Als Sauerstoffspeicherkomponente kommen insbesondere Cer/Zirkonium/Seltenerdmetall-Mischoxide in Frage. Der Begriff "Cer/Zirkonium/Seltenerdmetall-Mischoxid" im Sinne der vorliegenden Erfindung schließt physikalische Mischungen aus Ceroxid, Zirkoniumoxid und Seltenerdoxid aus. Vielmehr sind "Cer/Zirkonium/Seltenerdmetall-Mischoxide" durch eine weitgehend homogene, dreidimensionale Kristallstruktur gekennzeichnet, die idealerweise frei ist von Phasen aus reinem Ceroxid, Zirkoniumoxid bzw. Seltenerdoxid. Je nach Herstellungsverfahren können aber auch nicht vollständig homogene Produkte entstehen, die in der Regel ohne Nachteil verwendet werden können. Im Übrigen umfasst der Begriff Seltenerdmetall bzw. Seltenerdmetalloxid im Sinne vorliegender Erfindung kein Cer bzw. kein Ceroxid.

Als Seltenerdmetalloxide in den Cer/Zirkonium/Seltenerdmetall-Mischoxiden kommen beispielsweise Lanthanoxid, Yttriumoxid, Praseodymoxid, Neodymoxid und/oder Samariumoxid in Betracht. Bevorzugt sind Lanthanoxid, Yttriumoxid und/oder Praseodymoxid. Besonders bevorzugt sind Lanthanoxid und/oder Yttriumoxid und ganz besonders bevorzugt sind Kombinationen aus Lanthanoxid und Yttriumoxid, Yttriumoxid und Praseodymoxid, sowie Lanthanoxid und Praseodymoxid. In Ausführungsformen der vorliegenden Erfindung sind die Sauerstoffspeicherkomponenten besonders bevorzugt frei von Neodymoxid.

In bevorzugten Ausführungsformen der vorliegenden Erfindung enthalten eine oder alle Beschichtungen eine Erdalkaliverbindung wie z.B. Strontiumoxid, Bariumoxid oder Bariumsulfat. Die Menge an Bariumsulfat je Beschichtung beträgt insbesondere 2 bis 20 g/L, bevorzugt 3 -10 g/L Volumen des Wandflussfilters. Insbesondere enthält Beschichtung 1 und/oder 3 Strontiumoxid oder Bariumoxid.

In weiteren vorteilhaften Ausführungsformen der vorliegenden Erfindung enthalten eine oder alle der Beschichtungen Additive wie Seltenerdverbindungen wie z.B. Lanthanoxid und/oder Binder, wie z.B. Aluminiumverbindungen. Diese Additive werden in Mengen verwendet, die in weiten Grenzen variieren können und die der Fachmann im konkreten Fall mit einfachen Mitteln bestimmen kann. Diese helfen ggf. die Rheologie der Beschichtung zu verbessern.

In Ausführungsformen der vorliegenden Erfindung umfasst zumindest eine, bevorzugt jede der Beschichtungen 1 - 4 Lanthan-stabilisiertes Aluminiumoxid, Palladium, Rhodium oder Palladium und Rhodium und eine Zirkoniumoxid, Ceroxid, Lanthanoxid, sowie Yttriumoxid und/oder Praseodymoxid umfassende Sauerstoffspeicherkomponente. Sofern vorhanden ist in den Beschichtung der Yttriumoxid-Gehalt insbesondere 2 bis 15 Gew.-%, bevorzugt 3 bis 10 Gew.-%., bezogen auf das Gewicht der Sauerstoffspeicherkomponente. Das Gewichtsverhältnis von Lanthanoxid zu Yttriumoxid beträgt insbesondere 0,1 bis 1, bevorzugt 0,3 bis 1. Sofern vorhanden ist der Praseodymoxid-Gehalt insbesondere 2 bis 15 Gew.-%, vorzugsweise 3 bis 10 Gew.-%, bezogen auf das Gewicht der Sauerstoffspeicherkomponente. Das Gewichtsverhältnis von Lanthanoxid zu Praseodymoxid beträgt insbesondere 0,1 bis 1, bevorzugt 0,3 bis 1. Insbesondere eine der Beschichtungen 1 - 4 kann eine zusätzliche Sauerstoffspeicherkomponente umfassen, die Zirkoniumoxid, Ceroxid, Lanthanoxid, sowie Yttriumoxid und/oder Praseodymoxid enthält. Vorzugsweise gilt dies für alle Beschichtungen 1 - 4.

Zumindest eine der Beschichtungen 1 - 4 umfasst vorzugsweise in Ausführungsformen jeweils Lanthan-stabilisiertes Aluminiumoxid in Mengen von 35 bis 60 Gew.-%, besonders bevorzugt 40 bis 60 Gew.-%, sowie eine Sauerstoffspeicherkomponente in Mengen von 40 bis 50 Gew.-%, besonders bevorzugt 45 bis 50 Gew.-%, jeweils bezogen auf das Gesamtgewicht der jeweiligen Beschichtung. Zumindest eine der Beschichtungen 1 - 4 umfasst in Ausführungsformen jeweils Lanthan-stabilisiertes Aluminiumoxid in Mengen von 30 bis 50 Gew.-%, besonders bevorzugt 40 bis 50 Gew.-%, sowie eine Sauerstoffspeicherkomponente in Mengen von 50 bis 80 Gew.-%, besonders bevorzugt 55 bis 80 Gew.-%, jeweils bezogen auf das Gesamtgewicht der jeweiligen Beschichtung. In vorteilhaften Ausführungsformen der vorliegenden Erfindung beträgt in zumindest einer der Beschichtungen 1 - 4 das Gewichtsverhältnis von Aluminiumoxid zur Sauerstoffspeicherkomponente mindestens 0,7 bis maximal 1,5, vorzugsweise 0,8 - 1,2. In vorteilhaften Ausführungsformen der vorliegenden Erfindung beträgt zumindest in einer der Beschichtung 1 - 4 das Gewichtsverhältnis von Aluminiumoxid zur Sauerstoffspeicherkomponente mindestens 0,3 bis maximal 0,8, bevorzugt 0,4 - 0,6. Die hier genannten Ausführungsformen gelten vorzugsweise für alle Beschichtungen 1 - 4.

Ebenfalls Gegenstand der vorliegenden Erfindung ist ein Verfahren zur Herstellung eines erfindungsgemäßen Wandflussfilters, welches folgende Schritte aufweist:
i) eine erste Beschichtungssuspension wird im Überschuss über das erste Ende durch Anlegen einer Druckdifferenz über den vertikal arretierten Wandflussfilter in diesen eingebracht und mit einer Druckdifferenzumkehr wird ein Überschuss der ersten Beschichtungssuspension aus dem Wandflussfilter entfernt;
ii) eine dritte Beschichtungssuspension wird im Überschuss über das zweite Ende durch Anlegen einer Druckdifferenz über den vertikal arretierten Wandflussfilter in diesen eingebracht und mit einer Druckdifferenzumkehr wird ein Überschuss der dritten Beschichtungssuspension aus dem Wandflussfilter entfernt;
iii) eine zweite Beschichtungssuspension wird über das erste Ende durch Anlegen einer Druckdifferenz über den vertikal arretierten Wandflussfilter in diesen eingebracht;
iv) eine vierte Beschichtungssuspension wird über das zweite Ende durch Anlegen einer Druckdifferenz über den vertikal arretierten Wandflussfilter in diesen eingebracht.

Die Abfolge der Schritte i) - iv) ist dabei in erster Näherung nicht entscheidend. Wichtig ist, dass bei den Schritten i) und ii) eine Druckdifferenzumkehr stattfindet, bei der überschüssige Beschichtungssuspension aus dem Wandflussfilter entfernt wird. Zwischen dem Schritt i) und ii) als auch zwischen den Schritten iii) und iv) wird das Filter jeweils um 180° in der Arretierung gedreht. Es kann bevorzugt auf eine Drehung verzichtet werden, wenn erst von der ersten Seite des Filters die Beschichtungen nach i) und iii) und dann von dessen zweiter Seite aus die Beschichtungen gemäß ii) und iv) aufgetragen werden. Es sei angemerkt, dass die Beschichtungsschritte iii) und/oder iv) ebenfalls wie die Schritte i) bzw. ii) mit Druckdifferenzumkehr und einem Überschuss an Beschichtungssuspension durchgeführt werden können. In einer weiter bevorzugten Ausführungsform werden die Beschichtungssuspensionen bei den Schritten iii) und iv) jedoch ohne einen Überschuss an Beschichtungssuspension in den Wandflussfilter eingebracht. Hierbei wird - wie eingangs erwähnt - die Beschichtungssuspension vorgelegt und anschließend komplett in das Filter gesaugt und/oder gedrückt.

Zwischen den Schritten i) - iv) können weitere Zwischenschritte des Beschichtungsverfahrens erfolgen. Z.B. kann eine Zwischentrocknung oder Kalzinierung oder Drehung des Substrats im Rahmen der Erfindung durchgeführt werden, sofern der erfinderische Erfolg hiervon nicht über die Maßen beeinträchtigt wird. Es sei auch erwähnt, dass die Beschichtung mit jeweils gleichen oder jeweils unterschiedlichen katalytisch aktiven Materialien mit und ohne Zwischentrocknung ausgeführt werden kann. In einer bevorzugten Ausführungsform der vorliegenden Erfindung ist es deshalb denkbar, dass in ein vertikal arretiertes Wandflussfilter eine erste Beschichtungssuspension im Überschuss über die erste Stirnfläche durch Anlegen einer Druckdifferenz über das Wandflussfilter in dieses eingebracht wird und man anschließend einen Überschuss der ersten Beschichtungssuspension aus dem Wandflussfilter durch eine Druckdifferenzumkehr entfernt (Schritt i)). Die Druckdifferenzumkehr entfernt dabei den besagten Überschuss an Beschichtungssuspension entgegen der Beschichtungsrichtung aus den Kanälen des Wandflussfilters. Anschließend wird eine zweite Beschichtungssuspension ohne Überschuss über die erste Stirnfläche durch Anlegen einer Druckdifferenz über den Wandflussfilter in diesen eingebracht (Schritt iii)). Eine separate Trocknung erfolgt dabei vorzugsweise erst nach der Einbringung der zweiten Beschichtungssuspension. Allerdings ist es vorzugsweise ebenfalls möglich, wenn eine separate Zwischentrocknung in einem Ofen vor der Einbringung der zweiten Beschichtungssuspension erfolgt. Anschließend wird ebenso mit der dritten und vierten Beschichtung verfahren. Besonders bevorzugt ist allerdings eine Ausführungsform, bei der keine separate Trocknung in einem Ofen zwischen den Beschichtungsschritten erfolgt. Insbesondere können die Beschichtungen unter i) und iii) bzw. ii) und iv) ohne separate Trocknung als "wet-on-wet" Beschichtung erfolgen (Lit. US10183287BB; WO2019008078A1). Ggf. kann, sofern die einzelnen Beschichtungssuspensionen zu flüssig sind, nach der Beschichtung i) bzw. iii) eine kurze Zeit (in der Regel weniger als 10, bevorzugt weniger als 5 Sekunden) eine warme, trockene Luft (ca. 50°C - 80°C; <20% Luftfeuchte) durch das Filter geleitet werden. Anschließend erfolgt dann sofort die Beschichtung unter Schritt ii) bzw. iv) auf die Beschichtung i) bzw. iii). Durch den Wegfall von separaten Trocknungszyklen ist der Prozess zur Herstellung des erfindungsgemäßen Filters extrem effizient. Ohne separate Trocknung können äußerst bevorzugt solche Filter hergestellt werden, bei denen die Beschichtungen in den Schritten i) und iii) bzw. ii) und iv) von der Zusammensetzung her gleich sind.

Das erfindungsgemäße Wandflussfilter wird bevorzugt für die Filterung des Abgases von Verbrennungsmotoren verwendet. Das Filter kommt dabei vorzugsweise bei Abgas von Benzinmotoren zum Einsatz. Diese stoßen in der Regel relativ kleine Partikel aus, so dass eine gute Filtrationseffizienz gegeben sein muss. Der Abgasgegendruck sollte dabei nicht über die Maßen erhöht sein. Für die katalytische Aktivität können die erfindungsgemäßen Wandflussfilteraggregate mit weiteren Abgasminderungseinrichtungen kombiniert werden, z.B. solchen ausgewählt aus der Gruppe bestehend aus Dreiwegkatalysator, SCR-Katalysator, Stickoxidspeicherkatalysator, Kohlenwasserstofffalle, Stickoxidfalle. Ganz besonders bevorzugt ist die Kombination des erfindungsgemäßen Wandflussfilters und einem oder zwei weiteren TWC-Katalysatoren auf Durchflusssubstraten. Dabei können sich entweder der eine oder beide TWC-Katalysatoren in einer als motornah bekannten Position vor dem erfindungsgemäßen Filter befinden. Ebenfalls möglich ist die Positionierung des Filters als motornahes Aggregat. Besonders bevorzugt ist es jedoch, wenn ein TWC-Katalysator in einer motornahen Position arrangiert ist, dann das erfindungsgemäße Filter folgt und anschließend wieder ein TWC-Katalysator.

Die vorliegende Erfindung erlaubt, besonders vorteilhafte Wandflussfilter in Abgasanlagen einzusetzen. Dass diese eine derart gute Balance zwischen katalytischer Aktivität, Abgasgegendruck und Filtrationseffizienz erlauben, war vor dem Hintergrund des bekannten Standes der Technik allerdings nicht bekannt.

### Figuren:

Fig. 1 zeigt ein nicht erfindungsgemäßes Partikelfilter des Standes der Technik, das ein Wandflussfilter der Länge L (1) mit Kanälen E (2) und Kanälen A (3) umfasst, die sich parallel zwischen einem ersten Ende (4) und einem zweiten Ende (5) des Wandflussfilters erstrecken und die durch poröse Wände (6) getrennt sind, die Oberflächen OE (7) bzw. OA (8) bilden und wobei die Kanäle E (2) am zweiten Ende (5) und die Kanäle A (3) am ersten Ende (4) verschlossen sind. Eine erste Beschichtung (9) befindet sich in den Kanälen E (2) auf den Oberflächen OE (7) und eine zweite Beschichtung (10) in den Kanälen A (3) auf den Oberflächen OA (8). Dieses Filter ist ein Zwischenprodukt nach Aufbringen der ersten und dritten Beschichtung.
Fig. 2a - d zeigt schematische erfindungsgemäße Architekturen. Das Layout der Fig. 1 ist entsprechend zu den Fig. 2a - d hinzuzudenken. Es gelten gleiche Bezugszeichen. Die Größe der Rechtecke (I, II, III, IV) symbolisieren die jeweilige Menge an Beschichtung. Es sollen damit die erfindungsgemäß vorteilhaften Ausführungsformen mit einem entsprechenden Beschichtungsverhältnis zwischen I/II und III/IV deutlich gemacht werden.
Fig. 3 zeigt die verbesserte katalytische Aktivität der erfindungsgemäßen Ausgestaltungen der Fig. 2a = [1]; 2b = [2]; 2c = [3]; 2d = [4] im Vergleich zur Referenz gemäß Fig. 1.
Fig. 4 zeigt den Abgasgegendruck der erfindungsgemäßen Ausgestaltungen der Fig. 2a = [1]; 2b = [2]; 2c = [3]; 2d = [4] im Vergleich zur Referenz gemäß Fig. 1.
Fig. 5 zeigt die Filtrationseffizienz der erfindungsgemäßen Ausgestaltungen der Fig. 2a = [1]; 2b = [2]; 2c = [3]; 2d = [4] im Vergleich zur Referenz gemäß Fig. 1.

### Beispiele:

### Referenz

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt. Dabei wurde die Beschichtungssuspension auf die Filterwände des Substrats beschichtet und zwar zuerst in den Eingangskanälen auf eine Länge von 60 % der Filterlänge. Die Beladung des Einlasskanals betrug 83,33 g/l, die Edelmetallbeladung 1,06 g/l mit einem Verhältnis von Palladium zu Rhodium von 5 : 1. Der so erhaltene beschichtete Filter wurde getrocknet und anschließend kalziniert. Anschließend wurden die Ausgangskanäle des Filters auf eine Länge von 60 % der Filterlänge mit der gleichen Beschichtungssuspension beschichtet. Der so erhaltene beschichtete Filter wurde erneut getrocknet und anschließend kalziniert. Die Gesamtbeladung dieses Filters betrug somit 100 g/l, die Gesamtedelmetallbeladung 1,27 g/l mit einem Verhältnis von Palladium zu Rhodium von 5 : 1. Er wird nachstehend als Referenz/reference bezeichnet.

### Beispiel 1

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt. Dabei wurde die Beschichtungssuspension auf die Filterwände des Substrats beschichtet und zwar zuerst in den Eingangskanälen auf eine Länge von 25 % der Filterlänge (II). Die Beladung dieser Zone betrug 100 g/l, die Edelmetallbeladung 1,27 g/l mit einem Verhältnis von Palladium zu Rhodium von 5 : 1. Der so erhaltene beschichtete Filter wurde getrocknet und anschließend kalziniert. Anschließend wurden die Ausgangskanäle des Filters auf eine Länge von 25 % der Filterlänge (IV) mit der gleichen Beschichtungssuspension beschichtet. Der so erhaltene beschichtete Filter wurde erneut getrocknet und anschließend kalziniert. Im dritten Schritt wurde die Beschichtungssuspension in den Eingangskanälen auf eine Länge von 60 % der Filterlänge (I) beschichtet. Die Beladung dieser Zone betrug 41,67 g/l, die Edelmetallbeladung 0,53 g/l mit einem Verhältnis von Palladium zu Rhodium von 5 : 1. Der so erhaltene beschichtete Filter wurde getrocknet und anschließend kalziniert. Im letzten Schritt wurden die Ausgangskanäle des Filters auf eine Länge von 60 % der Filterlänge (III) mit der gleichen Beschichtungssuspension beschichtet. Der so erhaltene beschichtete Filter wurde erneut getrocknet und anschließend kalziniert. Die Gesamtbeladung dieses Filters betrug somit 100 g/l, die Gesamtedelmetallbeladung 1,27 g/l mit einem Verhältnis von Palladium zu Rhodium von 5 : 1. Er wird nachstehend als 1 bezeichnet.

### Beispiel 2

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt. Dabei wurde die Beschichtungssuspension auf die Filterwände des Substrats beschichtet und zwar zuerst in den Eingangskanälen auf eine Länge von 25 % der Filterlänge (II). Die Beladung dieser Zone betrug 66,67 g/l, die Edelmetallbeladung 0,85 g/l mit einem Verhältnis von Palladium zu Rhodium von 5 : 1. Der so erhaltene beschichtete Filter wurde getrocknet und anschließend kalziniert. Anschließend wurden die Ausgangskanäle des Filters auf eine Länge von 25 % der Filterlänge (IV) mit der gleichen Beschichtungssuspension beschichtet. Der so erhaltene beschichtete Filter wurde erneut getrocknet und anschließend kalziniert. Im dritten Schritt wurde die Beschichtungssuspension in den Eingangskanälen auf eine Länge von 60 % der Filterlänge (I) beschichtet. Die Beladung dieser Zone betrug 55,56 g/l, die Edelmetallbeladung 0,71 g/l mit einem Verhältnis von Palladium zu Rhodium von 5 : 1. Der so erhaltene beschichtete Filter wurde getrocknet und anschließend kalziniert. Im letzten Schritt wurden die Ausgangskanäle des Filters auf eine Länge von 60 % der Filterlänge (III) mit der gleichen Beschichtungssuspension beschichtet. Der so erhaltene beschichtete Filter wurde erneut getrocknet und anschließend kalziniert. Die Gesamtbeladung dieses Filters betrug somit 100 g/l, die Gesamtedelmetallbeladung 1,27 g/l mit einem Verhältnis von Palladium zu Rhodium von 5 : 1. Er wird nachstehend als 2 bezeichnet.

### Beispiel 3

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt. Dabei wurde die Beschichtungssuspension auf die Filterwände des Substrats beschichtet und zwar zuerst in den Eingangskanälen auf eine Länge von 60 % der Filterlänge (I). Die Beladung dieser Zone betrug 41,67 g/l, die Edelmetallbeladung 0,53 g/l mit einem Verhältnis von Palladium zu Rhodium von 5 : 1. Der so erhaltene beschichtete Filter wurde getrocknet und anschließend kalziniert. Anschließend wurden die Ausgangskanäle des Filters auf eine Länge von 60 % der Filterlänge (III) mit der gleichen Beschichtungssuspension beschichtet. Der so erhaltene beschichtete Filter wurde erneut getrocknet und anschließend kalziniert. Im dritten Schritt wurde die Beschichtungssuspension in den Eingangskanälen auf eine Länge von 25 % der Filterlänge (II) beschichtet. Die Beladung dieser Zone betrug 100 g/l, die Edelmetallbeladung 1,27 g/l mit einem Verhältnis von Palladium zu Rhodium von 5 : 1. Der so erhaltene beschichtete Filter wurde getrocknet und anschließend kalziniert. Im letzten Schritt wurden die Ausgangskanäle des Filters auf eine Länge von 25 % der Filterlänge (IV) mit der gleichen Beschichtungssuspension beschichtet. Der so erhaltene beschichtete Filter wurde erneut getrocknet und anschließend kalziniert. Die Gesamtbeladung dieses Filters betrug somit 100 g/l, die Gesamtedelmetallbeladung 1,27 g/l mit einem Verhältnis von Palladium zu Rhodium von 5 : 1. Er wird nachstehend als 3 bezeichnet.

### Beispiel 4

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt. Dabei wurde die Beschichtungssuspension auf die Filterwände des Substrats beschichtet und zwar zuerst in den Eingangskanälen auf eine Länge von 60 % der Filterlänge (I) beschichtet. Die Beladung dieser Zone betrug 55,56 g/l, die Edelmetallbeladung 0,71 g/l mit einem Verhältnis von Palladium zu Rhodium von 5 : 1. Der so erhaltene beschichtete Filter wurde getrocknet und anschließend kalziniert. Anschließend wurden die Ausgangskanäle des Filters auf eine Länge von 60 % der Filterlänge (III) mit der gleichen Beschichtungssuspension beschichtet. Der so erhaltene beschichtete Filter wurde erneut getrocknet und anschließend kalziniert. Im dritten Schritt wurde die Beschichtungssuspension in den Eingangskanälen auf eine Länge von 25 % der Filterlänge (II). Die Beladung dieser Zone betrug 66,67 g/l, die Edelmetallbeladung 0,85 g/l mit einem Verhältnis von Palladium zu Rhodium von 5 : 1. Der so erhaltene beschichtete Filter wurde getrocknet und anschließend kalziniert. Im letzten Schritt wurden die Ausgangskanäle des Filters auf eine Länge von 25 % der Filterlänge (IV) mit der gleichen Beschichtungssuspension beschichtet. Der so erhaltene beschichtete Filter wurde erneut getrocknet und anschließend kalziniert. Die Gesamtbeladung dieses Filters betrug somit 100 g/l, die Gesamtedelmetallbeladung 1,27 g/l mit einem Verhältnis von Palladium zu Rhodium von 5 : 1. Er wird nachstehend als 4 bezeichnet.

### Katalytische Charakterisierung

Alle fünf Partikelfilter wurden zusammen in einer Motorprüfstandsalterung gealtert. Diese besteht aus einer Schubabschaltungsalterung mit 950°C Abgastemperatur vor Katalysatoreingang (Maximale Betttemperatur 1030°C). Die Alterungszeit betrug 38 Stunden (siehe Motortechnische Zeitschrift, 1994, 55, 214-218). Anschließend wurden die katalytisch aktiven Partikelfilter im gealterten Zustand an einem Motorprüfstand im sogenannten "Light-off Test" getestet. Bei dem Light-off Test wird das Anspringverhalten bei stöchiometrischer Abgaszusammensetzung mit konstanter mittlerer Luftzahl λ bestimmt (λ =0,999 mit ±3,4% Amplitude). Die Ergebnisse sind in Fig. 3 dargestellt. Die erfindungsgemäßen Partikelfilter 1-4 und besonders 1 und 3 zeigen gegenüber der Referenz eine deutliche Verbesserung im Anspringverhalten.

### Physikalische Charakterisierung

Alle fünf Partikelfilter wurden am Motorprüfstand bezüglich des Abgasgegendrucks verglichen. Der mittlere Abgasgegendruck in einem WLTC Fahrzyklus ist in Fig. 4 dargestellt. Wie zu erwarten führt die geänderte Verteilung der Beschichtungssuspension zu einer leichten Staudruckerhöhung gegenüber der Referenz. Außerdem wurden alle fünf Partikelfilter am Motorprüfstand in WLTC Fahrzyklen auf Filtrationseffizienz untersucht. Fig. 5 zeigt die Filtrationseffizienz im ersten WLTC Zyklus. Die Filtrationseffizienz konnte für alle erfindungsgemäßen Partikelfilter 1-4 gegenüber der Referenz verbessert werden, besonders deutlich für 2 und 4.

## Patentansprüche

1. Wandflussfilter zur Verminderung der Partikelemissionen im Abgas von Benzinmotoren mit der Länge L, wobei das Wandflussfilter Kanäle E und A umfasst, die sich parallel zwischen einem ersten und einem zweiten Ende des Wandflussfilters erstrecken und die durch poröse Wände getrennt sind, die Oberflächen OE bzw. OA bilden, und wobei die Kanäle E am zweiten Ende und die Kanäle A am ersten Ende verschlossen sind, **dadurch gekennzeichnet, dass**
dieses sowohl auf den Oberflächen OE als auch OA zwei in separaten Beschichtungsschritten aufgetragene katalytisch aktive Beschichtungen aufweist,
wobei sich eine erste Beschichtung ausgehend vom ersten Ende des Wandflussfilters über 55 bis 96 % der Länge L erstreckt und eine zweite Beschichtung ausgehend vom ersten Ende des Wandflussfilters über 10 bis 40 % der Länge L erstreckt und wobei sich eine dritte Beschichtung ausgehend vom zweiten Ende des Wandflussfilters über 55 bis 96 % der Länge L erstreckt und eine vierte Beschichtung ausgehend vom zweiten Ende des Wandflussfilters über 10 bis 40 % der Länge L erstreckt.

2. Wandflussfilter nach Anspruch 1,
**dadurch gekennzeichnet, dass**
die erste Beschichtung ausgehend vom ersten Ende des Wandflussfilters über 55 bis 80 % der Länge L erstreckt und die zweite Beschichtung ausgehend vom ersten Ende des Wandflussfilters über 20 bis 40 % der Länge L erstreckt und wobei sich die dritte Beschichtung ausgehend vom zweiten Ende des Wandflussfilters über 55 bis 80 % der Länge L erstreckt und die vierte Beschichtung ausgehend vom zweiten Ende des Wandflussfilters über 20 bis 40 % der Länge L erstreckt.

3. Wandflussfilter nach Anspruch 1 oder 2,
**dadurch gekennzeichnet, dass**
das Verhältnis der Menge an katalytisch aktiver Beschichtung in g/L zwischen der ersten Beschichtung und der zweiten Beschichtung bzw. zwischen der dritten und der vierten Beschichtung gleich oder weniger als 1:1 und gleich oder mehr als 1:3 beträgt.

4. Wandflussfilter nach einem der vorhergehenden Ansprüche,
**dadurch gekennzeichnet, dass**
die Beschichtungen auf der Oberfläche OE und OA jeweils ungleich sind.

5. Wandflussfilter nach einem der vorhergehenden Ansprüche,
**dadurch gekennzeichnet, dass**
zumindest eine der Beschichtungen 1 - 4 stabilisiertes Aluminiumoxid in einer Menge von 20 bis 70 Gew.-%, bezogen auf das Gesamtgewicht der Beschichtung, Rhodium, Palladium oder Palladium und Rhodium und eine oder mehrere Sauerstoffspeicherkomponenten in einer Menge von 30 bis 80 Gew.-%, bezogen auf das Gesamtgewicht der jeweiligen Beschichtung aufweist.

6. Verfahren zur Herstellung eines Wandflussfilters gemäß einem der Ansprüche 1 - 5, **dadurch gekennzeichnet, dass**
es folgende Schritte aufweist:
i) eine erste Beschichtungssuspension wird im Überschuss über das erste Ende durch Anlegen einer Druckdifferenz über den vertikal arretierten Wandflussfilter in diesen eingebracht und mit einer Druckdifferenzumkehr wird ein Überschuss der ersten Beschichtungssuspension aus dem Wandflussfilter entfernt;
ii) eine dritte Beschichtungssuspension wird im Überschuss über das zweite Ende durch Anlegen einer Druckdifferenz über den vertikal arretierten Wandflussfilter in diesen eingebracht und mit einer Druckdifferenzumkehr wird ein Überschuss der dritten Beschichtungssuspension aus dem Wandflussfilter entfernt;
iii) eine zweite Beschichtungssuspension wird über das erste Ende durch Anlegen einer Druckdifferenz über den vertikal arretierten Wandflussfilter in diesen eingebracht;
iv) eine vierte Beschichtungssuspension wird über das zweite Ende durch Anlegen einer Druckdifferenz über den vertikal arretierten Wandflussfilter in diesen eingebracht.

7. Verfahren nach Anspruch 6,
**dadurch gekennzeichnet, dass**
die Beschichtungssuspensionen bei den Schritten iii) und iv) ohne einen Überschuss an Beschichtungssuspension in den Wandflussfilter eingebracht werden.

8. Verfahren nach Anspruch 6 oder 7,
**dadurch gekennzeichnet, dass**
keine separate Trocknung des Wandflussfilters zwischen den Beschichtungsschritten erfolgt.

9. Verwendung eines Wandflussfilters nach einem der Ansprüche 1 - 5 in einem Abgassystem für Benzinmotorenabgase.

10. Verwendung nach Anspruch 9,
**dadurch gekennzeichnet, dass**
als weitere Abgasminderungsaggregate solche ausgewählt aus der Gruppe bestehend aus Dreiwegkatalysator, SCR-Katalysator, Stickoxidspeicherkatalysator, Kohlenwasserstofffalle, Stickoxidfalle im Abgassystem vorhanden sind.

## Claims

1. Wall flow filter for reducing particulate emissions in the exhaust gas of gasoline engines, the wall flow filter having a length L, wherein the wall flow filter comprises channels E and A which extend in parallel between a first end and a second end of the wall flow filter and which are separated by porous walls forming surfaces OE and OA, and wherein the channels E are closed at the second end and the channels A are closed at the first end,
**characterized in that**
this filter has two catalytically active coatings applied in separate coating steps on both the surfaces OE and OA, wherein a first coating extends from the first end of the wall flow filter over 55 to 96% of the length L and a second coating extends from the first end of the wall flow filter over 10 to 40% of the length L and wherein a third coating extends from the second end of the wall flow filter over 55 to 96% of the length L and a fourth coating extends from the second end of the wall flow filter over 10 to 40% of the length L.

2. Wall flow filter according to claim 1,
**characterized in that**
the first coating extends from the first end of the wall flow filter over 55 to 80% of the length L and the second coating extends from the first end of the wall flow filter over 20 to 40% of the length L and wherein the third coating extends from the second end of the wall flow filter over 55 to 80% of the length L and the fourth coating extends from the second end of the wall flow filter over 20 to 40% of the length L.

3. Wall flow filter according to claim 1 or 2,
**characterized in that**
the ratio of the amount of catalytically active coating in g/L between the first coating and the second coating or between the third and the fourth coating is equal to or less than 1:1 and equal to or more than 1:3.

4. Wall flow filter according to any one of the preceding claims,
**characterized in that**
the coatings on the surface OE and OA are unequal.

5. Wall flow filter according to any one of the preceding claims,
**characterized in that**
at least one of the coatings 1 - 4 comprises stabilized aluminum oxide in an amount of from 20 to 70 wt.%, based on the total weight of the coating, rhodium, palladium or palladium and rhodium and one or more oxygen storage components in an amount of from 30 to 80 wt.%, based on the total weight of the particular coating.

6. Method for producing a wall flow filter according to any one of claims 1 to 5,
**characterized in that**
it comprises the following steps:
i) a first coating suspension is introduced into the vertically locked wall flow filter in excess via the first end by applying a pressure difference across the wall flow filter, and an excess of the first coating suspension is removed from the wall flow filter by means of a pressure difference reversal;
ii) a third coating suspension is introduced into the vertically locked wall flow filter in excess via the second end by applying a pressure difference across the wall flow filter, and an excess of the third coating suspension is removed from the wall flow filter by means of a pressure difference reversal;
iii) a second coating suspension is introduced into the vertically locked wall flow filter via the first end by applying a pressure difference across the wall flow filter;
iv) a fourth coating suspension is introduced into the vertically locked wall flow filter via the second end by applying a pressure difference across the wall flow filter.

7. Method according to claim 6,
**characterized in that**
the coating suspensions in steps iii) and iv) are introduced into the wall flow filter without an excess of coating suspension.

8. Method according to claim 6 or 7,
**characterized in that**
the wall flow filter is not separately dried between the coating steps.

9. Use of a wall flow filter according to any of claims 1 to 5 in an exhaust gas system for gasoline engine exhaust gases.

10. Use according to claim 9,
**characterized in that**
further exhaust gas reduction units selected from the group consisting of three-way catalytic converters, SCR catalytic converters, nitrogen oxide storage catalytic converters, hydrocarbon traps, nitrogen oxide traps are present in the exhaust gas system.

## Revendications

1. Filtre à écoulement mural permettant de réduire les émissions de particules dans les gaz d'échappement de moteurs à essence de longueur L, dans lequel le filtre à écoulement mural comprend des canaux E et A qui s'étendent parallèlement entre une première et une seconde extrémité du filtre à écoulement mural et qui sont séparés par des parois poreuses formant des surfaces OE et OA, respectivement, et dans lequel les canaux E sont fermés à la seconde extrémité et les canaux A sont fermés à la première extrémité,
**caractérisé en ce que**
celui-ci présente, tant sur les surfaces OE que OA, deux revêtements catalytiquement actifs appliqués dans des étapes de revêtement séparées, dans lequel un premier revêtement s'étend à partir de la première extrémité du filtre à écoulement mural sur 55 à 96 % de la longueur L et un deuxième revêtement s'étend à partir de la première extrémité du filtre à écoulement mural sur 10 à 40 % de la longueur L et dans lequel un troisième revêtement s'étend à partir de la seconde extrémité du filtre à écoulement mural sur 55 à 96 % de la longueur L et un quatrième revêtement s'étend à partir de la seconde extrémité du filtre à écoulement mural sur 10 à 40 % de la longueur L.

2. Filtre à écoulement mural selon la revendication 1,
**caractérisé en ce que**
le premier revêtement s'étend à partir de la première extrémité du filtre à écoulement mural sur 55 à 80 % de la longueur L et le deuxième revêtement s'étend à partir de la première extrémité du filtre à écoulement mural sur 20 à 40 % de la longueur L, et dans lequel le troisième revêtement s'étend à partir de la seconde extrémité du filtre à écoulement mural sur 55 à 80 % de la longueur L et le quatrième revêtement s'étend à partir de la seconde extrémité du filtre à écoulement mural sur 20 à 40 % de la longueur L.

3. Filtre à écoulement mural selon la revendication 1 ou 2,
**caractérisé en ce que**
le rapport de la quantité de revêtement catalytiquement actif en g/L entre le premier revêtement et le deuxième revêtement ou entre le troisième et le quatrième revêtement respectivement est égal ou inférieur à 1:1 et égal ou supérieur à 1:3.

4. Filtre à écoulement mural selon l'une des revendications précédentes,
**caractérisé en ce que**
les revêtements sur la surface OE et OA sont respectivement différents.

5. Filtre à écoulement mural selon l'une des revendications précédentes,
**caractérisé en ce**
**qu'**au moins un des revêtements 1 à 4 comprend de l'oxyde d'aluminium stabilisé en une quantité de 20 à 70 % en poids par rapport au poids total du revêtement, du rhodium, du palladium ou du palladium et du rhodium, et un ou plusieurs composants de stockage d'oxygène en une quantité de 30 à 80 % en poids par rapport au poids total du revêtement respectif.

6. Procédé pour la fabrication d'un filtre à écoulement mural selon l'une des revendications 1 à 5,
**caractérisé en ce**
**qu'**il comprend les étapes suivantes :
i) une première suspension de revêtement est introduite en excès dans le filtre à écoulement mural par l'intermédiaire de la première extrémité en appliquant une différence de pression à travers le filtre à écoulement mural bloqué verticalement et, avec une inversion de la différence de pression, un excès de la première suspension de revêtement est retiré du filtre à écoulement mural ;
ii) une troisième suspension de revêtement est introduite en excès dans le filtre à écoulement mural par l'intermédiaire de la seconde extrémité en appliquant une différence de pression à travers le filtre à écoulement mural bloqué verticalement et, avec une inversion de la différence de pression, un excès de la troisième suspension de revêtement est retiré du filtre à écoulement mural ;
iii) une deuxième suspension de revêtement est introduite dans le filtre à écoulement mural par l'intermédiaire de la première extrémité en appliquant une différence de pression à travers le filtre à écoulement mural bloqué verticalement ;
iv) une quatrième suspension de revêtement est introduite dans le filtre à écoulement mural par l'intermédiaire de la seconde extrémité en appliquant une différence de pression à travers le filtre à écoulement mural bloqué verticalement.

7. Procédé selon la revendication 6,
**caractérisé en ce que**
les suspensions de revêtement sont introduites dans le filtre à écoulement mural sans excès de suspension de revêtement lors des étapes iii) et iv).

8. Procédé selon la revendication 6 ou 7,
**caractérisé en ce**
**qu'**aucun séchage séparé du filtre à écoulement mural n'est effectué entre les étapes de revêtement.

9. Utilisation d'un filtre à écoulement mural selon l'une des revendications 1 à 5 dans un système d'échappement pour les gaz d'échappement de moteurs à essence.

10. Utilisation selon la revendication 9,
**caractérisée en ce que**
comme autres unités de réduction des gaz d'échappement, celles choisies dans le groupe constitué d'un catalyseur à trois voies, d'un catalyseur SCR, d'un catalyseur de stockage des oxydes d'azote, d'un piège à hydrocarbures, d'un piège à oxydes d'azote sont présentes dans le système d'échappement.
